# EUROPEAN PATENT APPLICATION

(11) **EP 0 845 248 A2**
(43) Date of publication of application: **03.06.1998**
(21) Application number: 97830528.2
(22) Date of filing: 21.10.1997
(51) Int. Cl.: A61C 13/265

(54) **System of attachment with elastic retaining ball, for removable dental prosthesis**

(30) Priority: 28.10.1996 IT FI960254
(71) Applicant: Boesmi, Natalino, 57100 Livorno (IT)
(72) Inventor: Boesmi, Natalino, 57100 Livorno (IT)
(74) Representative: Mannucci, Gianfranco, Dott.-Ing.

(57) **Abstract**

A first component (1) - firmly anchored in the mouth - forms a seat (1S) for accommodating a portion (12A) of a second component (12) integral with the prosthesis; the spherical elastic retaining member (14) is accommodated in a housing (12B) formed in said portion (12A) and protrudes from said housing so as to engage with an indentation (11) formed in said seat (1S) of said first component (1).

## Description

The invention relates to an attachment for a removable dental prosthesis of the type that comprises a first component anchored to the dental arch, and a second component fixed to the removable prosthesis. Partial dental prostheses are often employed and must be removable, that is to say attachable and detachable from the dental arch, on which there are one or more posts, sometimes intended to be encapsulated. The first component of the joining device must be able to be anchored to a tooth/post, or to a root or to a component of an implant. The second component of the device, which is integral with the removable prosthesis, must be able to be attached to and detached from this first component. These devices or attachments as they are called must first of all provide a support and a firm connection between the prosthesis and the implant or tooth/post, and in the second place must provide a connection that can easily and frequently be disconnected by the user himself or herself.

An earlier intellectual property document belonging to the present proprietor (Italian application No. Fl/94/A/195 of 21 October 1994) provides an attachment for a removable dental prosthesis of the type that comprises: a first component anchored to the tooth/post; a second component integral with the removable prosthesis; and an elastic retention system with a retaining member (spherical or of some other shape) that engages with a corresponding indentation. In that intellectual property document, the elastic retention system comprises a retaining member made of a material with a certain degree of elasticity, so as to act simultaneously both as the component that comes into contact with a corresponding shaping of the component to be retained, and as the component that produces the elastic action. Said retaining member may advantageously be spherical.

To produce a spring-mounted prosthesis, the surfaces that act together to absorb loads are made curved, so as to permit relative sliding and hence angular movements of the second component (and hence of the prosthesis) about a transverse (i.e. medio-distal) axis to be produced by a load applied to the prosthesis and against an elastic reaction from the elastic retaining member; the two components also have planar lateral guide surfaces; suitable stops can limit the angular excursions of the second component and prosthesis.

These systems, though having advantages over previously known systems, present certain disadvantages, one of which is their not inconsiderable size.

The present invention avoids this and other disadvantages and offers other advantages, which will be clear - to those skilled in the art - on reading the following text.

The invention relates to an attachment for a removable dental prosthesis, comprising a first component firmly anchored in the mouth, a second component which is integral with the removable prosthesis, and an elastic retention system with a retaining member (spherical or of some other shape) that engages with a corresponding indentation, which elastic retention system comprises a spherical retaining member made of a material having a certain degree of elasticity so as to act simultaneously both as the component that comes into contact with a corresponding shaping of the second component to be retained, and as the component that produces the elastic effect.

A fundamental feature of the invention is: that the first component - firmly anchored in the mouth - forms a seat for accommodating a portion of the second component integral with the prosthesis and in that the spherical elastic retaining member is accommodated in the housing formed in said portion and protrudes from said housing so as to engage with at least one indentation formed in said seat of said first component.

For stability against movements across the direction of the forces of mastication, both said seat of the first component and said portion of the second component are of non-circular section in a plane perpendicular to the direction of movement for fitting and removal of the prosthesis.

Said housing in said portion of the second component can be so shaped that the spherical elastic retaining member protrudes on two diametrically opposite sides, in which case said seat of the first component contains two opposing indentations.

In one possible range of models, said seat of the first component and said portion of the second component form a prismatic coupling.

The connection of the prosthesis may be on the outside of the prismatic seat formed in the first component; as a variant, said portion of said second component may include a lateral projection for anchoring the prosthesis, and said first component therefore has along said seat a slot through which said projection extends.

In an embodiment of the attachment for a pivoting prosthesis, said seat in the first component and said portion of the second component possess two opposing engaging flat parallel sliding surfaces; said spherical elastic retaining member acts as a hinge between said two components about an axis lying on the central diameter of the two parts protruding therefrom, so that the prosthesis, which is integral with the second component, can pivot.

In an embodiment for an implant, the invention is especially advantageous as the attachment is applicable directly on the axis of the implant screw, and there are therefore no lateral loads or loads at any point on a screwed primary bar.

The invention will be understood more clearly from a perusal of the description and the accompanying drawing, which latter shows a practical, non-restrictive example of the invention. In the drawing:
Fig. 1 shows an implant with the attachment in a first embodiment of the invention, in a vertical section;
Fig. 2 shows a view from the plane marked II-II in Fig. 1;
Figs. 3 and 4 show in isolation the second component integral with the prosthesis, in section on III-III as marked in Figure 2 and in the external view on IV-IV as marked in Fig. 2 with parts in section;
Figs. 5, 6 and 7 show in isolation certain parts from Fig. 1 in the same section, a section on VI-VI as marked in Fig. 5 and a section on VII-VII as marked in Fig. 1;
Fig. 8 shows a section through a variant of Fig. 1;
Figs. 9 and 10 show, of a second embodiment of the attachment according to the invention: an external view of the second component integral with the prosthesis; and a section on X-X as marked in Fig. 9 comprising the first component also;
Figs. 11 to 16 show, of a third embodiment of the attachment according to the invention: the second component in section and, separately, the elastic spherical retaining member; the same section with the two components assembled; an external view of the complete attachment; a section on XIV-XIV as marked in Fig. 13; and, in isolation, the first component integral with the fixed structure, on section XV-XV as marked in Figs. 14 and 16 and on section XVI-XVI as marked in Fig. 15;
Figs. 17, 18, 19 and 20 show a fourth embodiment of the invention in an external view, and in sections XVIII-XVIII and XIX-XIX as marked in Fig. 17; and
Figs. 21 to 24 show a variant of the embodiment of Figs. 17 to 20 in a view from plane XXI-XXI as marked in Fig. 22, in sections XXII-XXII, XXIII-XXIII as marked in Fig. 21, and in the section and partial view on XXIV-XXIV as marked in Fig. 22 with the two components separated.

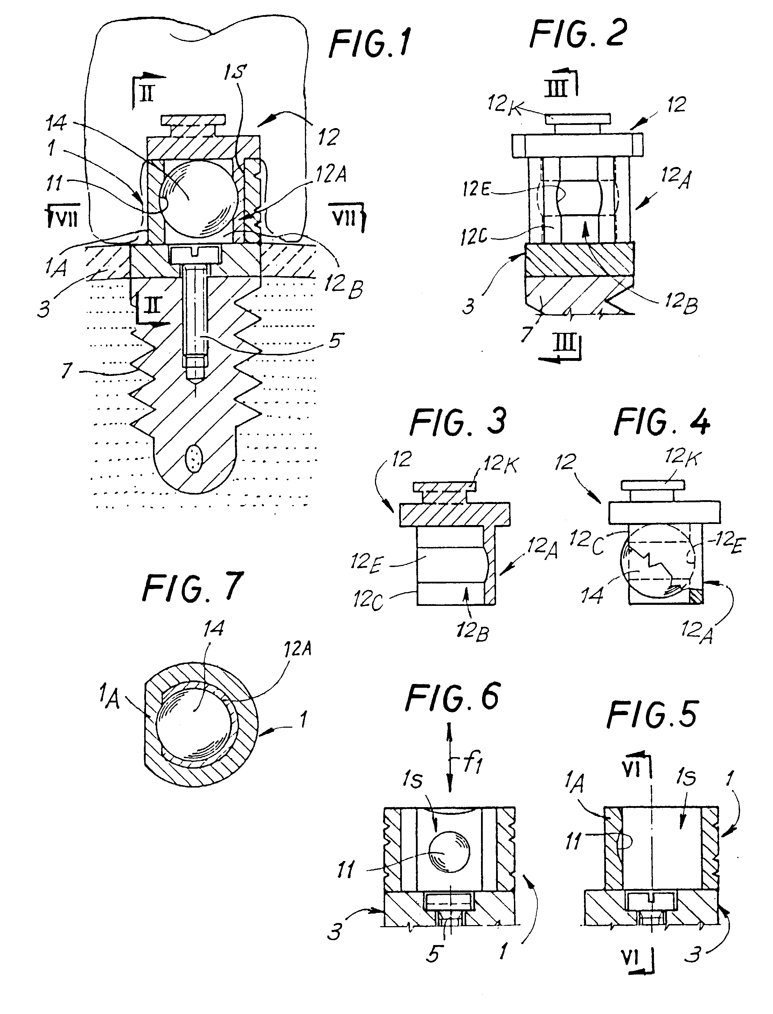

As illustrated in Figs. 1 to 8, a first version of the invention involves making a first component 1 which is integral with the structure anchored to the mouth of the user and which may be a structure engaged on a tooth/post, or on a tooth root, or forming part of an implant on the maxillary or mandibular arch. The first component 1, as shown in Figs. 1, 5, 6, 7 and 8, is designed to be soldered to a component 3 which is fixed by a screw 5 to a body 7, which in turn is held in place by screw means or any other suitable means that firmly secures it to a maxillary or mandibular arch, using an implant technique known per se.

Integral with the prosthesis 10, which must be removable directly by the patient, is a second component 12 comprising a portion 12A that fits into the seat 1S of the first component 1 by a sliding together of prismatic surfaces, partly cylindrical and partly planar, of the seat 1S. Said portion 12A is shaped in such a way as to form a housing 12B in which the spherical retaining member 14 can be accommodated. Said portion 12A reproduces the profile of the seat 1S and thus presents a flat 12C in a position corresponding to the internal planar surface of the flattened part 1A of the first component 1, and also has an annular groove 12E interrupted by the window that is formed by the flat 12C corresponding to the planar part 1A of the seat 1S. Said annular groove 12E is at the same level as the indentation 11. The component 12 is firmly anchored to the prosthesis 10.

The numeral 14 indicates the spherical elastic retaining member which, as already stated, projects from the window formed by the flat 12C and is held in the annular groove 12E whose profile corresponds to the equatorial profile of the spherical retaining member 14.

The attachment formed in this way by components 1 and 12 when the spherical elastic retaining member 14 is present permits insertion of the portion 12A in the seat 1 S and extraction of this portion 12A from said seat 1S of the first component 1, by a sliding movement in the direction of the double arrow f1. The retaining action is exerted by the spherical retaining member 14 which, once the portion 12A is fully inserted in the seat 1S, reaches the indentation 11 and re-expands into it. The dimensions of the indentation 11 and the elastic properties of the spherical retaining member 14 can be used to produce a given desired resistance to detachment and sliding of the portion 12A with respect to the seat 1S for removal of the prosthesis such as 10. The second component 12 will be made with suitable projections and shaping such as 12K as anchorage for the prosthesis 10 to which said second component 12 must be firmly secured.

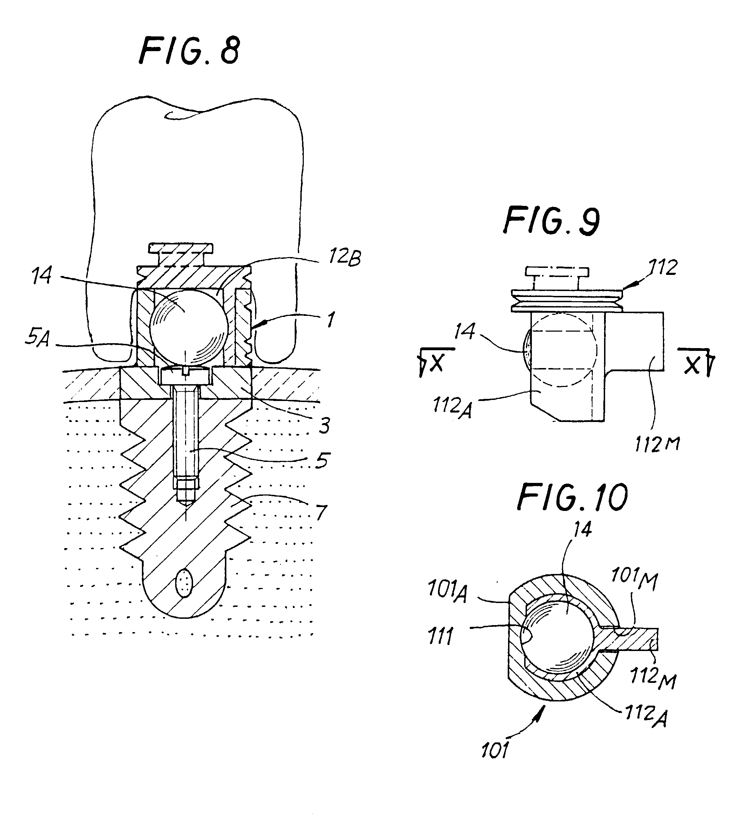

For the anchorage of the second component 12 on the prosthesis, a modified version may be used (see Figs. 9 and 10). The first component 101, which is similar to component 1 with a flattened wall 101A similar to the wall 1A and with an indentation 111 similar to the indentation 11, has, on the opposite side from the wall 101A and indentation 111A, a longitudinal opening 101M able to house a lateral projection 112M of the second component 112 that goes in the seat 101S; said lateral projection 112M can be used to supplement the anchorage of the prosthesis to the second component 112 where this is desirable or necessary, depending on the shape of the prosthesis that is to be removably anchored in position.

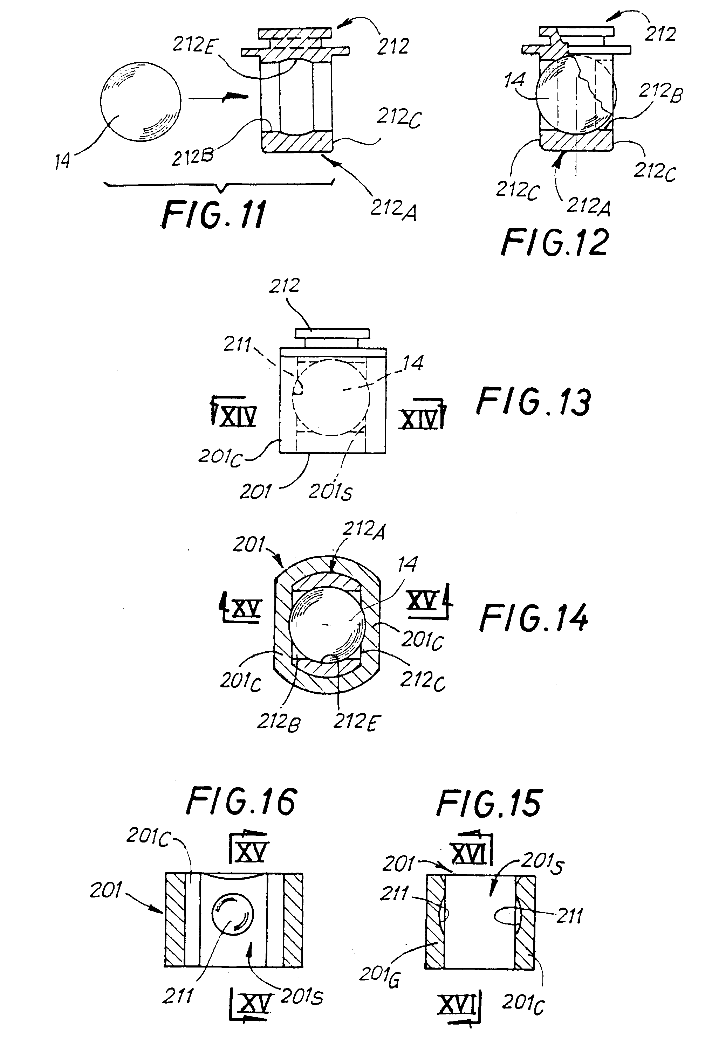

The attachment according to the invention can also be made in another version shown in Figs. 11 to 16, so as to offer two protrusions on opposite sides of the spherical elastic retaining member 14. In this other version, the essentially cylindrical first component 201 forming the seat 201S comprises two flat sections 201C, each of which includes an indentation 211 similar to the indentation 11 and with the same functions. In practice the two flat parts 201C are parallel to each other. The second component 212 correspondingly has a portion 212A with two opposite and parallel flats 212C, from each of which there projects a part of the spherical elastic retaining member 14 that fits into the two indentations 211, when the portion 212A of the second component 212 is inserted into the seat 201S of the first fixed component 201. In this version the housing for the elastic member 14 may be made in the form of a hole 214B that is transverse with respect to the prismatic shape of the portion 212A and perpendicular to the flats 212C; it may be unnecessary to have an annular throat such as 12E to keep the spherical elastic member 14 in position because this member can be held firmly between the two indentations 211 of the seat 201S; moreover an annular groove coaxial with the cylindrical housing 212B (which contains a through hole) can be provided to ensure the elastic retention of the spherical elastic member 14, as indicated at 212E (Figs. 11 and 14). In this version the applied retaining action is especially well balanced since it happens from two sides rather than one as in the previous embodiment shown in Figs. 1 to 8.

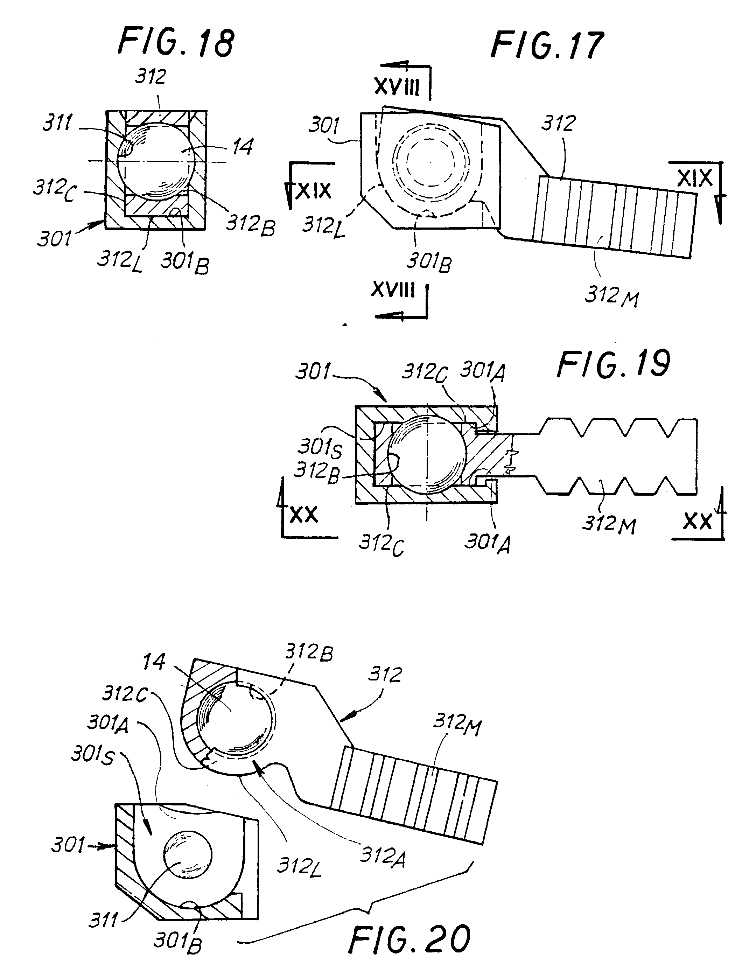

As a further development of the version shown in Figs. 11 to 16, a hinged version may be produced to allow the possibility of angular inclination of the prosthesis, which may be necessary in certain applications. In this further embodiment, shown in Figs. 17 to 20, the first component 301 - which is firmly anchored in the mouth - comprises a seat 301S defined in part by two flat parallel walls 301A, and is completed at the bottom by a saddle 301B, which is in the form of a partial cylinder or at least has surfaces which in section on geometrical planes parallel to the walls 301A are semicircular. The two walls 301A in the internal opposing surfaces contain two indentations 311 in the shape of spherical segments corresponding to the indentations 211 and indentation 11. The second component 312 possesses a portion 312A whose shape is such that it can be accommodated in the seat 301S in such a way that two flat parallel surfaces 312C thereon correspond to and slide against the internal surfaces of the two walls 301A, while a curved profile 312L is designed to nestle with an angular sliding action on the surface 301B of the first component 301. The second component 312 has a projection 312M that contributes to the anchoring of the prosthesis together with other shaped parts of the component 312 for the same purpose. The second component 312 contains a cylindrical housing 312B that is transverse, i.e. perpendicular, to the surfaces 312C, for accommodating the spherical elastic retaining member 14; This housing 312B is equivalent to the housing 212B of Figs. 11 to 16 and may include an annular throat equivalent to the throat 212E as a means of stabilizing the spherical elastic retaining member 14. Said spherical elastic retaining member 14 in this case engages with the indentations 311 formed in the opposing internal surfaces of the two flat parallel walls 301A.

The component 312 can be inserted between the walls 301A until the spherical elastic retaining member 14 - projecting from the surfaces 312C of the second component 312 - is properly housed in the indentations 311; in this position the surface 312L is in contact with the surface 301B and able to slide over it, while the second component 312 can be moved angularly about the axis defined by the transverse diameter of the spherical elastic retaining member 14, which coincides with the common axis of the two indentations 311. This makes it possible for the prosthesis to be displaced angularly, as is often required when the prosthesis projects sideways beyond the attachment without the benefit of a second stabilizing attachment; this is especially common at the posterior extremities of the dental arches, when replacing the most posterior molars.

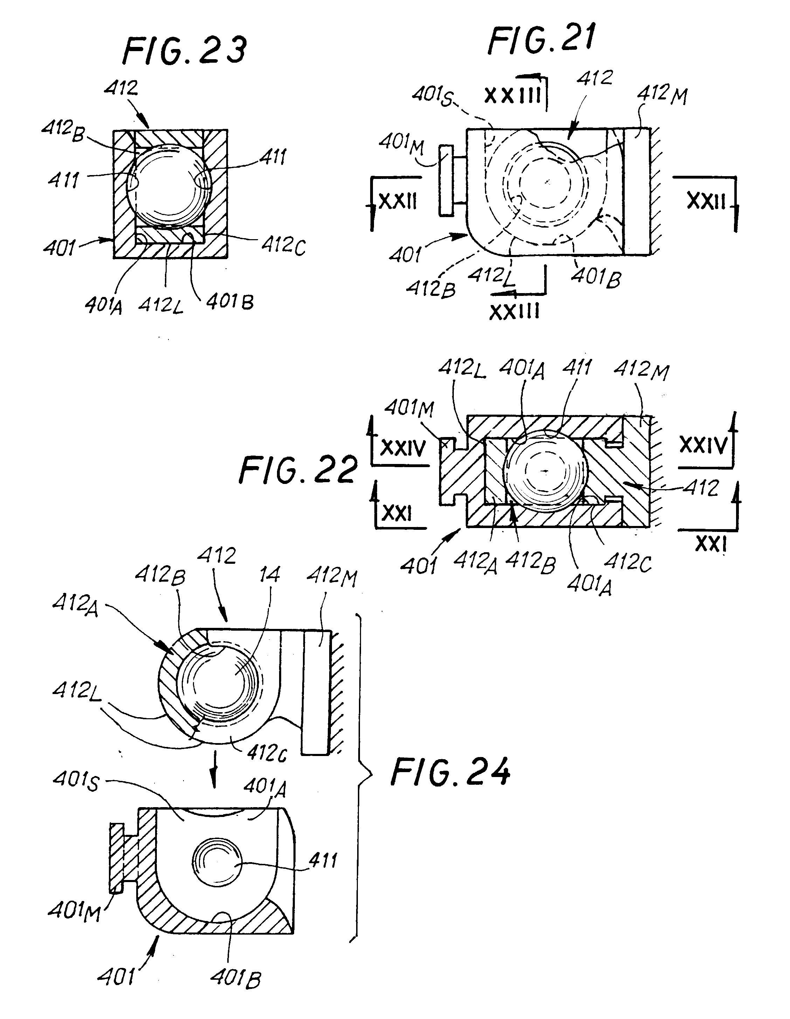

In the variant shown in Figs. 21 to 24, the arrangement of Figs. 17 to 20 is inverted in the sense that the component 401 is fixed to the prosthesis, by means such as a projection 401M; said component 401 contains a seat 401S defined in part by two flat parallel walls 401A and completed by a saddle 401B, which is shaped like a partial cylinder or at least has surfaces which in section on geometric planes parallel to the walls 401A is semicircular. The two walls 401A in the mutually opposing internal surfaces contain two indentations 411 in the shape of spherical segments corresponding to the indentations 311, 211 and to the indentation 11. The second component 412 is firmly anchored - by the part 412M - to the fixed structure, such as a tooth/post or other structure. Said second component 412 includes a portion 412A whose shape is such as to allow it to be accommodated in the seat 401S, so that two flat parallel surfaces 412C thereof correspond to and slide against the internal surfaces of the two walls 401A, while a curved profile 412L can fit into and slide angularly on the surface 401B of the first component 401. The second component 412 contains a through housing 412B which is cylindrical and transverse i.e. perpendicular to the surfaces 412C, for accommodating the spherical elastic retaining member 14; this housing 412B is equivalent to the housing 212B of Figs. 11 to 16 and to housing 312B of Figs. 17 to 20, and may include an angular throat equivalent to the throat 212E as a means of stabilizing the position of the spherical elastic retaining member 14. The spherical elastic retaining member 14 engages in the indentations 411 formed in the opposing internal surfaces of the two flat parallel walls 301A.

The component 412 can be inserted between the walls 401A until the spherical elastic retaining member 14 - projecting from the surfaces 412C of the second component 412 - is properly housed in the indentations 411; in this position the surface 412L is in contact with the surface 401B and able to slide over it, while the second component 412 can be moved angularly about the axis defined by the transverse diameter of the spherical elastic retaining member 14, which coincides with the common axis of the two indentations 411. This once again makes it possible for the prosthesis to be displaced angularly.

In all cases, action in one direction on the removable part of the prosthesis results in insertion of the portion 12A or 112A or 212A or 312A into the seat 1S or 101S or 201S or 301S of the first component, which is firmly anchored in the mouth, until the spherical elastic retaining member 14 is exerting its retaining action in the indentations such as 11, 111, 211 or 311. The reverse operation, resisted to a limited degree by the spherical elastic retaining member until the resistance offered by the abovementioned indentations is overcome, allows removal of the prosthesis; all this can be done directly by the prosthesis user.

It should be observed that in the variant shown in Fig. 8 the spherical elastic retaining member 14 can come into contact with the slightly projecting head 5A of the screw 5 before said member 14 settles in the indentations 11 or equivalent means; this produces a slight axial elastic reaction which occurs immediately before the spherical retaining member 14 reaches its secured position in the indentations 11 or equivalent means, and facilitates the initial movement of removal of the prosthesis.

When the attachment is designed as in Figs. 1 and 8, i.e. in an implant situation, the implant remains firmly engaged even if the attachment has to be removed for inspection, replacement or the like, because of the use of a screw 5 which is only operated on such an occasion and is left undisturbed for frequent detachment operations for reasons of hygiene of the prosthesis, benefiting instead from the attachment described.

The spherical elastic retaining member 14 introduced between two surfaces of a sliding fit and held in the indentation or indentations such as 11, 111, 211, 311, enters with friction and positions itself in its housing, thereby anchoring the removable dental prosthesis in place. This member 14 can easily be replaced, either when worn or in order to select a retaining member of different elasticity, to obtain a stronger or weaker retaining action.

The present attachment is applicable in many different versions: in implant situations or as an intracoronal or extracoronal attachment, whether single, double or multiple. In an implant situation the present attachment fulfils the need to make dental prostheses that must be removable even by the patient for daily hygiene, without any damage to the anchored part. The disadvantages of current implant retention techniques are thus avoided, where, in general, the prosthesis is screwed onto the implant by means of screws, creating the serious drawback that periodical visits to the dentist are necessary to have the prosthesis removed, an operation which is difficult for the dentist too since in the process of unscrewing and withdrawing the article the screws can become worn, crushed and deformed.

Other forms of attachment already in existence (see for example U.S. Patent No. 5,211,561) have a plastic cap, where the mastication forces are absorbed on a metal support, generally of spherical form; the components of the attachment receive all the loads, with the result that the cap is very quickly liable to become "fatigued", losing its elasticity and hence its ability to stabilize the prosthesis in the dental arch.

All this is avoided with the attachment described above. In particular it fulfils the object of providing an attachment - for the application of a removable prosthesis - which gives firm, secure anchorage for the telescoping together of the male and female parts, and at the same time a frictional insertion and a retention obtained by the spherical elastic member 14, which is housed in the male part and can be replaced so as to restore the retaining function or to alter the retaining action.

In the many different versions of the present attachment, the components can be manufactured with a very small number of simple mechanical processes.

The functions of retention and of absorbing loads are fulfilled by separate structural components so that the elasticity of the retention members is not subjected to the loads absorbed by the prosthesis on the implant, whereas the stability of the prosthesis is not influenced by the elasticity of the retention members because the reaction surfaces ensure correct positioning and sufficient stability of the prosthesis.

The telescopic fitting of the attachments allows mechanical insertion and removal with the elastic member which has functions of friction and retention. With these attachments the prosthesis can be removed by the patient himself or herself for regular cleaning of the implant, which is fundamental to the preservation and durability of the implant.

By selecting different elasticities for the spherical elastic retaining member 14, the prosthesis can be retained with greater or less strength.

In many different versions the attachment works on the axis of each individual implant so that the implant itself does not suffer harmful lateral movements. In cases of multiple implants and of a primary bar, the attachments may be fitted at any point of the bar.

The attachments according to the invention can be applied at any point of a primary bar screwed to the implants. The antitrauma effect can be achieved advantageously by varying the height of the screw head, as indicated for example at 5A in Fig. 8 to ensure that the spherical elastic retaining member comes into contact with said screw before arriving at full insertion; this effect can also be produced by inserting a small plastic ring over the bearing surfaces of the male part inside the female part, thereby producing an analogous shock-absorbing effect.

It will be understood that the drawing shows only an example purely by way of a practical demonstration of the invention, it being possible to vary the latter in its shapes and arrangements without thereby departing from the scope of the concept underlying said invention. The function of any reference numerals in the accompanying claims is to facilitate the reading of the claims with reference to the description and drawing, and is not to limit the scope of protection represented by the claims.

## Claims

1. Attachment for a removable dental prosthesis, comprising a first component firmly anchored in the mouth, a second component which is integral with the removable prosthesis, and an elastic retention system with a retaining member that engages with a corresponding indentation, which elastic retention system comprises a spherical retaining member made of a material having a certain degree of elasticity so as to act simultaneously both as the component that comes into contact with a corresponding shaping of the first component, and as the component that produces the elastic effect, which attachment is characterized in that the first component (1; 101; 201; 301;) - firmly anchored in the mouth - forms a seat (1S, 101S; 201S; 301S) for accommodating a portion (12A, 112A; 212A; 312A) of the second component (12; 112; 212; 312) - integral with the prosthesis - and in that the spherical elastic retaining member (14) is accommodated in a housing (12B; 112B; 212B; 312B) formed in said portion (12A; 112A; 212A; 313A) and protrudes from said housing so as to engage with at least one indentation (11; 111; 211; 311) formed in said seat (1S; 101S; 201S; 301S) of said first component (1; 101; 201; 301).

2. Attachment according to Claim 1, characterized in that said seat (1S; 101S; 201S; 301 S) of the first component (1; 101; 201; 301) and said portion (12A; 112A; 212A; 312A) of the second component are of non-circular section in a plane perpendicular to the direction of movement for fitting and removal of the prosthesis.

3. Attachment according to Claim 1 or 2, characterized in that said housing (212B) in said portion (212A) of said second component (212) is so shaped that the spherical elastic retaining member (14) protrudes on two diametrically opposite sides, and in that said seat (201S) of the first component (201) contains two opposing indentations (211).

4. Attachment according to Claim 1 or 2 or 3, characterized in that said seat (1S, 101S, 201S) of the first component (1, 101, 201) and said portion (12A, 112A, 212A) of the second component (12; 112; 212) form a prismatic coupling.

5. Attachment according to Claim 1 or 2 or 3, characterized in that said portion (112A) of said second component (112) includes a lateral projection (112M) for anchoring the prosthesis, and in that said first component (101) comprises along said seat (101S) a slot (101M) for said projection (112M).

6. Attachment according to Claim 1 or 2 or 3, characterized in that said seat (301S, 401S) of one of the two components (301, 401) and said portion (312A, 412A) of the other component (312, 412) possess two opposing flat parallel sliding surfaces (301A - 312C, 401A - 412C) and in that said spherical elastic retaining member (14) acts as a hinge between said two components (301 - 312, 401 - 412) about an axis lying on the diameter of the two protruding parts of said member (14), so that the prosthesis can pivot.

7. Attachment according to Claim 6, characterized in that the two components (301 or 401 and 312 or 412) are also in sliding contact on surfaces of revolution (301B - 312 L or 401B - 412L) on which the masticatory pressure is absorbed.

8. Attachment with elastic retaining ball, for a removable dental prosthesis; the whole as described above and as illustrated by way of example in the accompanying drawing.
